# EUROPÄISCHE PATENTSCHRIFT

(11) **EP 1 629 025 B1**
(45) Veröffentlichungstag und Bekanntmachung des Hinweises auf die Patenterteilung: **08.10.2014**
(21) Anmeldenummer: 04735210.9
(22) Anmeldetag: 28.05.2004
(51) Int. Cl.: C08G 59/40

(54) **VERWENDUNG VON HARNSTOFF-DERIVATEN ALS BESCHLEUNIGER FÜR EPOXIDHARZE**
USE OF UREA DERIVATIVES AS ACCELERATORS FOR EPOXY RESINS
UTILISATION DE DERIVES DE L'UREE COMME ACCELERATEURS POUR RESINES EPOXY

(30) Priorität: 30.05.2003 DE 10324486
(43) Veröffentlichungstag der Anmeldung: 01.03.2006
(73) Patentinhaber: AlzChem AG, 83308 Trostberg (DE)
(72) Erfinder: ANTELMANN, Björn, CH-8047 Zürich (CH); HUBER, Sylvia, 83352 Altenmarkt (DE); GÜTHNER, Thomas, 83308 Trostberg (DE)
(74) Vertreter: Dey, Michael
(86) Internationale Anmeldenummer: PCT/EP2004/005787
(87) Internationale Veröffentlichungsnummer: WO 2004/106402

(56) Entgegenhaltungen:
- DATABASE WPI Section Ch, Week 199837 Derwent Publications Ltd., London, GB; Class A21, AN 1998-433957 XP002305388 & JP 10 182794 A (TOTO KASEI KK) 7. Juli 1998 (1998-07-07)
- ZHANG B-L ET AL: "A study on properties of epoxy resin toughened by functionalized polymer containing rigid, rod-like moiety" EUROPEAN POLYMER JOURNAL, PERGAMON PRESS LTD. OXFORD, GB, Bd. 36, Nr. 1, Januar 2000 (2000-01), Seiten 205-213, XP004251530 ISSN: 0014-3057

## Beschreibung

Die Verwendung von Epoxidharzen ist aufgrund ihrer hervorragenden Eigenschaften wie beispielsweise hohe Schlagzähigkeit und Abriebfestigkeit und guter Chemikalienbeständigkeit sehr weit verbreitet und findet in vielen Bereichen Verwendung. Epoxidharze zeigen hervorragende Haftfähigkeit und elektrisches Isolationsvermögen. Sie dienen z.B. als Matrix für Faserverbundstoffe, z.B. beim Bau von Windkraftanlagen und im Luftfahrtbereich als strukturelle Komponenten. In der Elektronik kommen sie als Elektrolaminate in Leiterplatten zum Einsatz. Darüber hinaus sind sie weit verbreitet im Einsatz als Strukturklebstoffe, als Gießlacke und als Pulverlackharze.

Die Härtung von Epoxidharzen verläuft nach verschiedenen Mechanismen. Neben der Härtung mit Phenolen oder Anhydriden wird sehr häufig die Härtung mit Aminen zur Vernetzung der Epoxidgruppen beschrieben. Dabei wird die stöchiometrische Menge Wasserstoffatome, wie sie z.B. bifunktionelle Amine liefern können, zugesetzt. Ein weiterer Mechanismus beschreibt die Reaktion eines Initiators oder Beschleunigers mit Epoxidgruppen, wobei ein hochreaktives Zwischenprodukt gebildet wird, welches mit weiteren Epoxidgruppen reagieren kann, ohne dass weitere Vernetzer notwendig sind. Die Initiatoren können auch die Aktivierungsenergie der Reaktion von Vernetzer- oder Härtermolekülen erniedrigen, so dass die Härtungstemperaturen erheblich herabgesetzt werden. Verbindungen, welche diese Eigenschaften aufweisen, sind im Allgemeinen tertiäre Amine, Imidazole oder auch substituierte Harnstoffe, welche beispielsweise die Härtungstemperatur von Dicyandiamid herabsetzen können.

Üblicherweise werden die Einzelkomponenten von Epoxidharz-Formulierungen erst unmittelbar vor dem Härten und Erwärmen zusammengemischt, um eine vorzeitige Reaktion zu verhindern. Hierbei werden das Harz und getrennt hiervon eine Mischung aus Härter und Beschleuniger zusammen gegeben und anschließend durch Erwärmen zur Reaktion gebracht. Ein Nachteil dieser Zweikomponentengemische ist eine relativ kurze Topfzeit, d.h. eine relativ kurze Zeit, in der das Gemisch verarbeitet werden kann. Ebenfalls können Fehler beim Mischen zu inhomogenen Produkten und damit zu unbefriedigenden Ergebnissen führen. Einkomponentenmischungen enthalten neben Harz und weiteren Bestandteilen (wie Füllstoffe, Thixotropisierungsagentien, Pigmente usw.) einen bei Raumtemperatur latenten Härter, haben eine deutlich längere Topfzeit und benötigen zum Aushärten erhöhte Temperaturen, insbesondere über 100 °C und meist längere Härtungszeiten. Ein typisches Beispiel für einen latenten Härter stellt Dicyandiamid dar (vgl. EP 148 365 A1, US 2,637,715 B1). Um diese Nachteile zu überwinden, werden solchen Einkomponentengemischen chemisch latente Beschleuniger zugesetzt, wobei Verkürzungen der Lagerstabilität und der Verarbeitungszeit in Kauf genommen werden, um die Temperatur des Aushärtens herabzusetzen. Solche latenten Beschleuniger sind beispielsweise insbesondere Urone, wie z.B. 3-(3,4-Dichlorphenyl)-1,1-dimethylharnstoff (Diuron) (vgl. GB 1,153,639 A1, GB 1,293,142 A1, US 3,386,956 B1, US 6,231,959 B1). Bei diesen Verbindungen handelt es sich üblicherweise um 1,1-Dialkyl-3-arylharnstoffe, wobei der Aromat substituiert oder unsubstituiert sein kann, oder aber hydriert ist. Bei erhöhten Temperaturen setzen diese Verbindungen Dimethylamin und das Arylisocyanat frei, welche die Härtungsreaktion mit Dicyandiamid synergistisch beschleunigen. Damit kann bei deutlich niedrigeren Temperaturen ausgehärtet werden. Die Temperatur, bei welcher diese Dissoziation des Urons einsetzt und somit die Vernetzungsreaktion beginnt, hängt von der Art der Substituenten ab. Gleichzeitig findet man, dass je niedriger die Temperatur ist, bei der die Aushärtung beginnt, desto geringer auch die Stabilität einer solchen Mischung bei Temperaturen unterhalb der Härtungstemperatur ist.

Die bisher eingesetzten arylsubstituierten Urone weisen nur eine begrenzte Stabilität in der Mischung auf, d.h. es besteht weiter Bedarf an neuen Beschleunigern, welche die Fähigkeit langer Lager- und Verarbeitungsstabilität in Kombination mit hoher Reaktivität aufweisen. Zusätzlich sollen die mechanischen Eigenschaften des ausgehärteten Kunststoffs durch den Zusatz des Beschleunigers nicht wesentlich verschlechtert werden.

Viele der Verbindungen, die als latente Beschleuniger eingesetzt werden, zeigen eine nicht ausreichende Löslichkeit in gebräuchlichen Lösemitteln, wodurch das Anwendungsspektrum deutlich verringert ist, insbesondere in Bereichen, in denen eine gleichmäßige Reaktion notwendig ist. Einige der eingesetzten Uron-Beschleuniger sind halogensubstituiert, was zudem ihre Anwendung im Elektronikbereich einschränkt.

Der vorliegenden Erfindung lag daher die Aufgabe zugrunde, latente Beschleuniger für Epoxidharz-Systeme bereitzustellen, welche die genannten Nachteile des Standes der Technik nicht aufweisen. Unter latenten Beschleunigern versteht man Zusatzstoffe zu einem Harz-Härter-Gemisch, welche die Topfzeit, d.h. die Zeit in welcher die Mischung verarbeitbar ist, möglichst nicht erniedrigen und gleichzeitig die Reaktivität, d.h. die Vernetzung bei erhöhter Temperatur beschleunigen. Es sind somit Verbindungen erwünscht, die eine möglichst lange Verarbeitungsdauer ermöglichen. Die erfindungsgemäßen Beschleuniger für Epoxidharz-Systeme sollen folglich eine hohe Reaktivität und sehr gute Lagerstabilität bei Raumtemperatur bzw. bei Temperaturen unterhalb der Härtungstemperaturen besitzen und darüber hinaus möglichst halogenfrei bzw. toxikologisch unbedenklich sein.

Diese Aufgabe wurde erfindungsgemäß dadurch gelöst, dass man als Beschleuniger unsymmetrisch substituierte Harnstoff-Derivate der allgemeinen Formel (I) 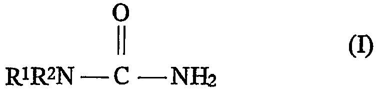 einsetzt, wobei R¹ und R² jeweils unabhängig einen linearen oder verzweigten aliphatischen Kohlenwasserstoff-Rest mit 1 bis 4 C-Atomen bedeuten.

R¹ und R² können beispielsweise Methyl, Ethyl, Propyl und Butyl sein. Beispiele für solche Harnstoff-Derivate sind beispielsweise N,N-Diethylharnstoff, N-N-Dipropylharnstoff, N,N-Ethylmethylharnstoff und N,N-Dimethylharnstoff. Ein bevorzugtes Harnstoff-Derivat ist N,N-Dimethylharnstoff.

Es hat sich überraschenderweise gezeigt, dass die erfindungsgemäß vorgeschlagenen Beschleuniger nicht nur eine sehr gute Reaktivität und Lagerstabilität aufweisen, sondern auch keinerlei negativen Einfluss auf die mechanischen Eigenschaften des gehärteten Materials ausüben.

Der Einsatz von Dimethylharnstoff als Beschleuniger in Kombination mit Dicyandiamid wird zwar gemäß JP-OS 79-26000 für Urethan-modifizierte Epoxidharz-Systeme empfohlen, doch sind die Lagerstabilitäten in diesen Formulierungen nur vergleichbar mit denjenigen, die mit (1,1-Methylendi-p-phenylen) bis (3,3-Dimethylharnstoff) (=MDI-Uron) erzielt werden. Überraschenderweise konnte mit den unsymmetrisch substituierten Harnstoff-Derivaten in den erfindungsgemäß beanspruchten Epoxidharz-Systemen wesentlich bessere Lagerstabilitäten erhalten werden, als dies mit MDI-Uron möglich ist.

Auch aus der JP-OS 81-133856, in der die Kombination von N,N-Dimethylharnstoff mit Phenolnovolaken als Härter für Epoxidharzsysteme im Bereich Halbleitersysteme beschrieben werden, findet sich kein Hinweis auf den Einfluss von N,N-Dimethylharnstoff auf die Lagerstabilität der entsprechenden Epoxidharz-Formulierungen.

Erfindungsgemäß werden in Kombination mit Dicyandiamid als latentem Härter als Beschleuniger unsymmetrisch substituierte Harnstoff-Derivate der allgemeinen Formel (I) 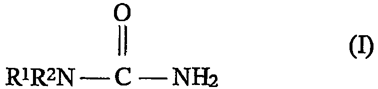 eingesetzt, wobei R¹ und R² jeweils unabhängig einen linearen oder verzweigten aliphatischen Kohlenwasserstoff-Rest mit 1 bis 4 C-Atomen bedeuten. Hierbei kommen Methyl-, Ethyl-, Propyl- und Butylreste in Frage, die linear oder gegebenenfalls auch verzweigt sein können. Beispiele für erfindungsgemäße Harnstoff-Derivate sind N,N-Dimethylharnstoff, N,N-Diethylharnstoff, N-N-Dipropylharnstoff sowie N,N-Ethylmethylharnstoff. Das Harnstoff-Derivat N,N-Dimethylharnstoff wird bevorzugt verwendet.

Es ist als erfindungswesentlich anzusehen, dass die erfindungsgemäß vorgeschlagene Kombination von unsymmetrisch substituierten Harnstoff-Derivaten und Dicyandiamid für folgende Epoxidharz-Systeme eingesetzt werden: Epoxidharze auf Basis von gegebenenfalls halogenierten Bisphenolen vom Typ A oder F sowie auf der Basis von Resorcinol oder Tetrakisphenylolethan.

Epoxidharze auf der Basis von Bisphenol A und F werden überwiegend im Bereich der Faserverbundwerkstoffe, der Klebstoffe sowie auch höhermolekular als Festharze in Pulverlacken eingesetzt.

Im Bereich der Elektrolaminate wird vom gehärteten Epoxidharz besondere Flammfestigkeit und hohe Temperaturbeständigkeit erwartet. Hierzu werden überwiegend halogenierte Systeme von Bisphenol A eingesetzt, z.B. Tetrabrombisphenol A-Derivate oder trifluormethylsubstituierte Varianten davon.

Besonders flammfeste Composites werden beispielsweise mit Epoxidharzen auf der Basis von Resorcinol und Tetrakisphenylolethan hergestellt.

Die Mengenverhältnisse von Dicyandiamid und Harnstoff-Derivat zu dem entsprechenden Epoxidharz kann in weiten Grenzen variiert werden. Es hat sich jedoch als besonders vorteilhaft erwiesen, das Dicyandiamid in einer Menge von etwa 1 bis 15 Gew.-%, bevorzugt etwa 2 bis 12 Gew.-%, besonders bevorzugt etwa 2 bis 8 Gew.-%, bezogen auf das Epoxidharz, einzusetzen. Das Harnstoff-Derivat wird in einer Menge von etwa 0,5 bis 15 Gew.-%, bevorzugt etwa 1 bis 12 Gew.-%, bezogen auf das Epoxidharz, eingesetzt. Eine besonders bevorzugte Menge beträgt etwa 1 bis 10 Gew.-%, bezogen auf das Epoxidharz.

Gemäß einer bevorzugten Ausführungsform kommen das Harnstoff-Derivat und das Dicyandiamid in einer möglichst feinteiligen Form zum Einsatz, wobei die Komponenten eine bevorzugte mittlere Teilchengröße von etwa 0,5 bis 100 µm, insbesondere etwa 10 bis 50 µm, bevorzugt etwa 2 bis 10 µm, aufweisen. Die Härtungsreaktion der erfindungsgemäß vorgeschlagenen Beschleuniger und Härter mit dem jeweiligen Epoxidharzen kann nach den üblichen Methoden durchgeführt werden, wobei die Härtung bei Temperaturen zwischen etwa 70 und 220 °C, insbesondere zwischen etwa 80 und 160 °C durchgeführt wird.

Die erfindungsgemäß beanspruchte Kombination von Harnstoff-Derivat als Beschleuniger und Dicyandiamid als latenter Härter eignet sich z.B. hervorragend für die Epoxidharz-Heißhärtung im Bereich der Faserverbundwerkstoffe (Composite-Materialien), Pulverlack-Beschichtungen, Elektrolaminate sowie Klebstoffe.

Die Vorteile der erfindungsgemäßen Beschleuniger/Härter-Kombination sind die ausgezeichnete Reaktivität und sehr gute Lagerstabilität. Überraschenderweise sind auch die mechanischen Eigenschaften der entsprechend ausgehärteten Harze ebenfalls hervorragend und vergleichbar mit denen der bereits eingesetzten blockierten Beschleuniger UR 200 (Diuron) und UR 300 (Fenuron).

Aufgrund dieser sehr guten anwendungstechnischen Eigenschaften und einer geringen Toxizität sind die erfindungsgemäß vorgeschlagenen Härter/Beschleuniger-Systeme hervorragend für den technischen Einsatz geeignet.

Die nachfolgenden Beispiele sollen die Erfindung näher erläutern.

### Beispiele

Folgende Produkte und Stoffe wurden in den Beispielen eingesetzt:

### Epoxidharze:

Epikote 828 (Fa. Resolution): Bisphenol-A-Harz, EEW 185

DER 664 UE (Fa. Dow): Festharz, EEW 910 (Harz)

### Härter:

Dyhard 100 S (Fa. Degussa): mikronisiertes Dicyandiamid,

Korngröße 98 % < 10 µm, 50% ca. 2,5 µm (Dyh 100 S)

### Beschleuniger:

Dyhard UR 200 (Fa. Degussa): mikronisiertes Diuron bzw. 3-((3,4-Dichlorphenyl)-1,1-dimethylharnstoff, Korngröße 98 % < 10 µm, 50 % ca. 2,5 µm (UR 200)

Dyhard UR 300 (Fa. Degussa): mikronisiertes Fenuron bzw. 3-Phenyl-1,1-dimethylharnstoff, Korngröße 98 % < 10 µm, 50 % ca. 2,5 µm (UR 300)

Dyhard UR 500 (Fa. Degussa): mikronisiertes TDI-Uron bzw. Toluyl-bis-1,1-dimethylharnstoff, Korngröße 98 % < 10 µm, 50 % ca. 2,5 µm (UR 500)

Dyhard MIA 5 (Fa. Degussa): mikronisiertes Addukt von Methylimidazol an Bisphenol-A-Harz (Epikote 828), Korngröße 98 % < 70 µm

N,N-Dimethylharnstoff bzw. 1,1-Dimethylharnstoff (Fa. Merck): im Labor vermahlen, Korngröße 98 % < 10 µm, 50 % ca. 2,5 µm (1,1-DMH)

N,N-Diethylharnstoff bzw. 1,1-Diethylharnstoff (Fa. Merck): im Labor vermahlen, Korngröße 98 % < 10 µm, 50 % ca. 2,5 µm (1,1-DEH)

MDI-Uron, (1,1'-Methylendi-p-phenylen) bis (3,3-Dimethylharnstoff) wurde nach bekannten Methoden aus MDI (1,1'-Methylendi-p-phenylen)dilsocyanat und Dimethylamin hergestellt (z.B. EP 402 020 A1, CS 233 068 B1) und anschließend im Labor vermahlen, Korngröße 98 % < 10 µm, 50 % ca. 2,5 µm

### Additive:

Lanco Wax TPS-040 (Fa. Lubrizol), mikronisiert im Labor 98 % < 80 µm

### Beispiel 1 (erfindungsgemäß):

Es wurden jeweils 5 g einer der Zusammensetzung in der zweiten Spalte von links in Tabelle 1 ("Komponenten") entsprechenden Formulierung aus Bisphenol A Harz (Epikote 828, EEW 185), Dyhard 100 S als Härter und erfindungsgemäßem Beschleuniger 1,1-Dimethylharnstoff (1,1-DMH) bzw. 1,1-Diethylharnstoff (1,1-DEH) sowie als Vergleich dazu Formulierungen, welche den Zusammensetzungen der zweiten Spalte von links in Tabelle 2 ("Komponenten") entsprechen, und welche die nicht erfindungsgemäßen Uron-Standardbeschleuniger Dyhard UR 200 (Diuron) und UR 300 (Fenuron) enthalten, hergestellt. Es wurde jeweils die Gelzeit bei der angegebenen Temperatur bestimmt und die Reaktivität mittels DSC bestimmt.

Als Temperaturprogramm für die Bestimmung der Peaktemperatur (DSC peak) wurde mit einer Rate 10 °C/min von 30 auf 350 °C aufgeheizt. Der Onset der Reaktion (DSC onset) wurde aus der gleichen Messung durch Anlegen der Tangente an den Reaktionspeak bestimmt.

Für die Bestimmung der Glasübergangstemperatur (Tg) wurde das Material der Gelzeitbestimmung bei 120 °C herangezogen. Die Formulierung wurde durch Erhitzen auf 200 °C (Temperaturprogramm: 30 bis 200 °C, Heizrate 20 °C/min) und Halten dieser Temperatur für 30 Minuten vollständig ausgehärtet. Nach dem Abkühlen auf Raumtemperatur (RT) wurde die Probe mit einer Aufheizrate von 10 °C/min von 30 auf 200 °C aufgeheizt und daraus die Tg bestimmt.

**Tabelle 1:**

| Versuch | Komponenten (Gew.-Teile) | DSC (Peak) | DSC (Onset) | Gelzeit bei 150 °C | Gelzeit bei 120 °C | Tg |
|---|---|---|---|---|---|---|
| 1.1 | Harz:Dyh100S:1,1-DMH | 163, 7 °C | 153, 2 °C | 3 min. | | 140, 3°C, |
| | | | | 33 sek. | | |
| | 100:6:1 | | | | | |
| 1.2 | Harz:Dyh100S:1,1-DMH | 154, 6 °C | 142, 4 °C | 2 min. | 13 min. | 127, 1 °C |
| | | | | 40 sek. | 30 sek. | |
| | 100:6:3 | | | | | |
| 1.3 | Harz:Dyh100S:1,1-DMH | 150, 8 °C | 137, 2 °C | 2 min. | 10 min. | 120, 3 °C |
| | | | | 01 sek. | | |
| | 100:6:5 | | | | | |
| 1.4 | Harz:Dyh100S:1,1-DEH | 180, 3 °C | 171, 2 °C | 10 min. | 56 min. | 152, 4 °C |
| | | | | 07 sek. | | |
| | 100:6:1 | | | | | |
| 1.5 | Harz:Dyh100S:1,1-DEH | 174, 5 °C | 165, 1 °C | 6 min. | 35 min. | 131, 8 °C |
| | | | | 28 sek. | | |
| | 100:6:3 | | | | | |
| 1.6 | Harz:Dyh100S:1,1-DEH | 170, 7 °C | 160, 5 °C | 5 min. | 28 min. | 118, 0 °C |
| | | | | 13 sek. | | |
| | 100:6:5 | | | | | |

**Tabelle 2:**

| Beispiele (nicht erfindungsgemäß): | | | | | | |
|---|---|---|---|---|---|---|
| Versuch | Komponenten (Gew.-Teile) | DSC (Peak) | DSC (Onset) | Gelzeit bei 150 °C | Gelzeit bei 120 °C, | Tg |
| 1.7 | Harz:Dyh100S:UR200 | 160, 7 °C | 151, 1 °C | 2 min. | 12 min. | 150, 4 °C |
| | 100:6:1 | | | 47 sek. | | |
| 1.8 | Harz:Dyh100S:UR200 | 154, 0 °C | 145, 9 °C | 2 min. | 8 min. | 134, 7 °C |
| | 100:6:3 | | | 06 sek. | | |
| 1.9 | Harz:Dyh100S:UR200 | 150, 9 °C | 143, 5 °C | 1 min. | 7 min. | 123, 2 °C |
| | 100:6:5 | | | 57 sek. | | |
| 1.10 | Harz:Dyh100S:UR300 | 157, 6 °C | 149, 3 °C | 2 min. | 12 min. | 146, 2 °C |
| | 100:6:1 | | | 23 sek. | | |
| 1.11 | Harz:Dyh100S:UR300 | 152, 1 °C | 144, 9 °C | 1 min. | 7 min. | 130, 7 °C |
| | 100:6:3 | | | 51 sek. | 30 sek | |
| 1.12 | Harz:Dyh100S:UR300 | 148, 8 °C | 142, 0 °C | 1 min. | 5 min. | 118, 4 °C |
| | 100:6:5 | | | 51 sek. | 30 sek | |

Im Vergleich der beiden Tabellen 1 und 2 wird ersichtlich, dass die Reaktivität des 1,1-Dimethylharnstoffes als Beschleuniger durchaus vergleichbar zu den Standardbeschleunigern der Uron-Reihe ist. Dies gilt auch in etwas geringerem Maß für den 1,1-Diethylharnstoff. Auch die Glasübergangstemperatur des mit Dialkylharnstoff-Beschleunigern gehärteten Materials liegt im Bereich der Werte, die mit den Standardbeschleunigern Dyhard UR 200 und UR 300 erreichbar sind. Insbesondere bei Zusatz höherer Mengen Beschleuniger ist die Tendenz zur Tg-Erniedrigung bei den erfindungsgemäßen Stoffen weniger stark ausgeprägt.

### Beispiel 2

### Latenzversuche:

Zu einer Formulierung aus 100 Gew.-Teilen Bisphenol-A-Epoxidharz (Epikote 828, EEW 185) und 6,5 Gew.-Teilen Dyhard 100 S wurden jeweils die in den Tabellen 3 und 4 angegebenen Mengen latenter Beschleuniger zugegeben. Nach der angegebenen Lagerdauer bei der jeweiligen Temperatur (40 °C bzw. 23 °C) wurde jeweils die Viskosität mittels Haake-Viskosimeter bestimmt. Die Viskositätswerte sind in den Spalten 3-8 der Tabellen 3 und 4 dargestellt.

**Tabelle 3:**

| Versuch | Lagerdauer bei 40 °C (d) | 1 Gew.-Teil 1,1-DMH (Pa*s) | 3 Gew.-Teile 1,1-DMH (Pa*s) | 5 Gew.-Teile 1,1-DMH (Pa*s) | 1 Gew.-Teil MDI-Uron (Pa*s) | 3 Gew.-Teile MDI-Uron (Pa*s) | 5 Gew.-Teile MDI-Uron (Pa*s) |
|---|---|---|---|---|---|---|---|
| 2.1 | 0 | 43 | 45 | 47 | 51 | 72 | 89 |
| 2.2 | 4 | 40 | 43 | 50 | 53 | 57 | 58 |
| 2.3 | 8 | 37 | 43 | 47 | 63 | 68 | 76 |
| 2.4 | 11 | 38 | 43 | 49 | 72 | 88 | 96 |
| 2.5 | 15 | 42 | 41 | 50 | 102 | 117 | 130 |
| 2.6 | 18 | 46 | 51 | 53 | | | |
| 2.7 | 22 | 54 | 49 | 62 | 212 | 347 | 508 |
| 2.8 | 25 | 55 | 58 | 56 | fest | fest | fest |
| 2.9 | 29 | 67 | 64 | 61 | | | |
| 2.10 | 32 | 63 | 66 | 60 | | | |
| 2.11 | 39 | 87 | 73 | 81 | | | |
| 2.12 | 43 | 160 | 102 | 101 | | | |
| 2.13 | 46 | 217 | 133 | 106 | | | |
| 2.14 | 50 | 545 | 143 | 116 | | | |
| 2.15 | 53 | 618 | 190 | 137 | | | |
| 2.16 | 57 | fest | 348 | 230 | | | |
| 2.17 | 60 | | 421 | 298 | | | |
| 2.18 | 64 | | fest | 445 | | | |
| 2.19 | 67 | | | 471 | | | |

Wie aus Tabelle 3 klar ersichtlich, weisen die erfindungsgemäßen Formulierungen erheblich bessere Eigenschaften bezüglich der Latenz auf: während in Formulierungen mit MDI-Uron bei 40 °C bereits nach 15 Tagen eine Verdopplung der Viskosität auftritt, ist dies beim 1,1-Dimethylharnstoff erst nach ca. 40 Tagen der Fall. Für MDI-Uron liegt die Verarbeitbarkeit der Formulierung unter 25 Tagen, während sie für Formulierungen mit 1,1-Dimethylharnstoff mehr als doppelt so hoch liegt (über 50 Tage).

**Tabelle 4:**

| Versuch | Lagerdauer bei 23 °C (d) | 1 Gew.-Teil 1,1-DMH (Pa*s) | 3 Gew.-Teile 1,1-DMH (Pa*s) | 5 Gew.-Teile 1,1-DMH (Pa*s) | 1 Gew.-Teil MDI-Uron (Pa*s) | 3 Gew.-Teile MDI-Uron (Pa*s) | 5 Gew.-Teile MDI-Uron (Pa*s) |
|---|---|---|---|---|---|---|---|
| 2.20 | 0 | 43 | 45 | 47 | 52 | 73 | 85 |
| 2.21 | 6 | 45 | 48 | 51 | 83 | 90 | 96 |
| 2.22 | 13 | 52 | 55 | 59 | 105 | 125 | 125 |
| 2.23 | 20 | 50 | 57 | 63 | 148 | 180 | 182 |
| 2.24 | 28 | 66 | 67 | 86 | fest | fest | fest |
| 2.25 | 35 | 66 | 74 | 106 | | | |
| 2.26 | 41 | 111 | 119 | 124 | | | |
| 2.27 | 48 | 157 | 182 | 234 | | | |
| 2.28 | 55 | 186 | fest | fest | | | |
| 2.29 | 62 | 234 | | | | | |

Die Verarbeitbarkeit der 1,1-Dimethylharnstoff enthaltenden Formulierungen ist bei Raumtemperatur ebenfalls erheblich höher als in Formulierungen mit MDI-Uron.

### Beispiel 3

### Vergleich N,N-Dimethylharnstoff mit verschiedenen Standardbeschleunigern (MDI-Uron, UR 300 und UR 500):

Es werden Formulierungen hergestellt, welche jeweils aus 100 Gew.-Teilen Bisphenol-A-Epoxidharz (Epikote 828, EEW 185), 6,5 Gew.-Teilen Dyhard 100 S und der in Tabelle 5 angegebenen Menge des jeweiligen Beschleunigers bestehen. Nach der in der zweiten Spalte angegebenen Lagerdauer bei 40 °C wurde jeweils die Viskosität mittels Haake-Viskosimeter bestimmt. Die Werte der Viskosität sind in den Spalten 3-6 der Tabelle 5 dargestellt.

**Tabelle 5:**

| Versuch | Lagerdauer bei 40 °C (d) | 3 Gew.-Teile 1,1-DMH (Pa*s) | 3 Gew.-Teile MDI-Uron (Pa*s) | 3 Gew.-Teile UR 300 (Pa*s) | 3 Gew.-Teile UR 500 (Pa*s) |
|---|---|---|---|---|---|
| 3.1 | 0 | 45 | 72 | 45 | 51 |
| 3.2 | 4 | 43 | 57 | 52 | 120 |
| 3.3 | 8 | 43 | 68 | fest | fest |
| 3.4 | 11 | 43 | 88 | | |
| 3.5 | 15 | 41 | 117 | | |
| 3.6 | 18 | 51 | | | |
| 3.7 | 22 | 49 | 347 | | |
| 3.8 | 25 | 58 | fest | | |
| 3.9 | 29 | 64 | | | |
| 3.10 | 32 | 66 | | | |
| 3.11 | 39 | 73 | | | |
| 3.12 | 43 | 102 | | | |
| 3.13 | 46 | 133 | | | |
| 3.14 | 50 | 143 | | | |
| 3.15 | 53 | 190 | | | |
| 3.16 | 57 | 348 | | | |
| 3.17 | 60 | 421 | | | |
| 3.18 | 64 | fest | | | |

Im Vergleich mit Standardbeschleunigern der Uronreihe wird der Vorteil der Verwendung von 1,1-Dimethylharnstoff in Einkomponentengemischen noch deutlicher: während die Standardprodukte UR 300 und UR 500 bei 40 °C nur bis zu 1 Woche verarbeitbar sind, kann eine Formulierung mit MDI-Uron immerhin 3 Wochen verarbeitet werden. Die Dimethylharnstoff enthaltende Formulierung ist sogar 7 bis 8 Wochen verarbeitbar.

### Beispiel 4

### Beispiele Pulverlack:

Folgende Formulierungen A, B, C und D, bestehend aus den in Tabelle 6 angegebenen Komponenten, wurden miteinander verglichen:

**Tabelle 6:**

| | A | B | C | D |
|---|---|---|---|---|
| DER 664UE, EEW 910 | 180 g | 180 g | 180 g | 180 g |
| TiO2 | 90 g | 90 g | 90 g | 90 g |
| Lanco Wax TPS-040 | 3 g | 3 g | 3 g | 3 g |
| Dicyandiamid | | | | 6 g |
| Dyhard 100 S | 9 g | 9 g | 9 g | |
| Dyhard UR 300 | - | - | 4,5 g | - |
| Dyhard UR 500 | 4,5 g | - | - | - |
| 1,1-DMH | - | 4,5 g | - | |
| Dyhard MIA 5 | | | | 1,5 g |

Die Formulierungen wurden jeweils bei 95 °C extrudiert.

Bei der Herstellung der entsprechenden Pulverlacke wurden jeweils die pulverförmigen Rohstoffe vorgemischt, zur besseren Homogenisierung bei 95 °C extrudiert, anschließend vermahlen und dann mittels einer Sprühpistole in Schichtdicken zwischen 60 bis 80 µm auf Stahlplatten aufgetragen und bei zwei unterschiedlichen Temperaturen (180 und 200 °C) ausgehärtet bzw.vernetzt. Die Ergebnisse der Prüfungen der gehärteten Pulverlackformulierungen sind in Tabelle 7 dargestellt.

**Tabelle 7:**

| | A 180 °C | A 200 °C | B 180 °C | B 200 °C | C 180 °C | C 200 °C | D 180 °C | D 200 °C |
|---|---|---|---|---|---|---|---|---|
| Schichtdicke (µm) | 78 | 73 | 80 | 82 | 83 | 77 | 65 | 66 |
| Verlauf | gut | gut | gut | gut | gut | gut | Orangen-haut | Orangenhaut |
| Glanz (60 °) | 73,2 | 72,7 | 61 | 63,2 | 67,1 | 68,1 | 84,6 | 93,4 |
| Weißgrad | 89 | 85,3 | 90,3 | 89,3 | 90,8 | 89,5 | 85,5 | 80,8 |
| Gelbwert | -0,52 | 3,7 | -1,6 | 0,44 | -1,9 | -0,54 | 2,1 | 7 |
| Errichsen mm | 8,4 | 7,2 | 8,4 | 8,3 | 8,4 | 8,4 | 8,4 | 8,4 |
| Dornbiege mm | <5 | <5 | <5 | <5 | <5 | <5 | <5 | <5 |
| Kugelschlag inch | 120 | 120 | 120 | 120 | 120 | 120 | 120 | 120 |

Die mechanischen Eigenschaften der erfindungsgemäßen Beschleuniger in Pulverlackformulierungen sind absolut vergleichbar mit dem Methylimidazol-Addukt (Dyhard MIA 5) des Standes der Technik bei gleichzeitig geringerer Vergilbungsneigung und besseren Verlaufseigenschaften.

## Patentansprüche

1. Verwendung von N,N-Dimethylharnstoff als Beschleuniger in Kombination mit Dicyandiamid als latenter Härter für Epoxidharz-Systeme auf Basis von gegebenenfalls halogenierten Bisphenolen vom Typ A oder F sowie auf Basis von Resorcinol oder Tetrakisphenylolethan, wobei die entsprechenden Epoxidharzsysteme eine Lagerstabilität bei 40 °C von mindestens über 50 Tagen aufweisen.

2. Verwendung nach Anspruch 1,
**dadurch gekennzeichnet,**
**dass** die entsprechenden Epoxidharzsyteme eine Lagerstabilität bei 40 °C von mindestens 53 Tagen aufweisen.

3. Verwendung nach Anspruch 1 oder 2,
**dadurch gekennzeichnet,**
**dass** man den N,N-Dimethylharnstoff in einer Menge von 0,5 bis 15 Gew.-%, bezogen auf das Epoxidharz, einsetzt.

4. Verwendung nach einem der Ansprüche 1 bis 3,
**dadurch gekennzeichnet,**
**dass** das Dicyandiamid in einer Menge von 1 bis 15 Gew.-%, bezogen auf das Epoxidharz, eingesetzt wird.

5. Verwendung nach einem der Ansprüche 1 bis 4,
**dadurch gekennzeichnet,**
**dass** die Härtungsreaktion der Epoxidharze bei Temperaturen zwischen 70 und 220 °C, insbesondere zwischen 80 und 160 °C, durchgeführt wird.

6. Verwendung nach einem der Ansprüche 1 bis 5,
**dadurch gekennzeichnet,**
**dass** der N,N-Dimethylharnstoff und das Dicyandiamid eine mittlere Teilchengröße von 0,5 bis 100 µm aufweisen.

7. Verwendung nach einem der Ansprüche 1 bis 6,
**dadurch gekennzeichnet,**
**dass** man den N,N-Dimethylharnstoff in Kombination mit Dicyandiamid als latenten Härter für die Epoxidharz-Heißhärtung im Bereich der Faserverbundwerkstoffe (Composite-Materialien), Pulverlack-Beschichtungen, Elektrolaminate sowie Klebstoffe einsetzt.

8. Verwendung von unsymmetrisch substituierten Harnstoff-Derivaten der allgemeinen Formel (I) 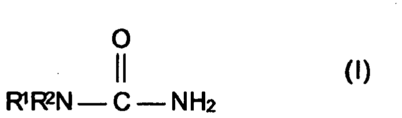 wobei R¹ und R² jeweils unabhängig einen linearen oder verzweigten aliphatischen Kohlenwasserstoff-Rest mit 1 bis 4 C-Atomen bedeuten, wobei die Harnstoff-Derivate der Formel (I) zur Verlängerung der Lagerstabilität von Epoxidharz-Systemen als Beschleuniger in Kombination mit Dicyandiamid als latenter Härter für Epoxidharz-Systeme auf Basis von gegebenenfalls halogenierten Bisphenolen vom Typ A oder F sowie auf Basis von Resorcinol oder Tetrakisphenylolethan eingesetzt werden.

## Claims

1. Use of N,N-dimethylurea as an accelerator in combination with dicyandiamide as a latent curing agent for epoxy resin systems based on optionally halogenated bisphenols of type A or F and also based on resorcinol or tetrakisphenylolethane, wherein the corresponding epoxy resin systems have a storage stability at 40 °C of at least more than 50 days.

2. Use according to claim 1, **characterised in that** the corresponding epoxy resin systems have a storage stability at 40 °C of at least 53 days.

3. Use according to either claim 1 or claim 2, **characterised in that** the N,N-dimethylurea is used in an amount of from 0.5 to 15 % wt.%, based on the epoxy resin.

4. Use according to any of claims 1 to 3, **characterised in that** the dicyandiamide is used in an amount of from 1 to 15 wt.%, based on the epoxy resin.

5. Use according to any of claims 1 to 4, **characterised in that** the curing reaction of the epoxy resins is carried out at temperatures between 70 and 220 °C, more particularly between 80 and 160 °C.

6. Use according to any of claims 1 to 5, **characterised in that** the N,N-dimethylurea and the dicyandiamide have an average particle size of from 0.5 to 100 µm.

7. Use according to any of claims 1 to 6, **characterised in that** the N,N-dimethylurea is used in combination with dicyandiamide as latent curing agents for the hot curing of epoxy resin in the field of fibre composite materials, powder coatings, electrical laminates, and adhesives.

8. Use of asymmetrically substituted urea derivatives of the general formula (I) 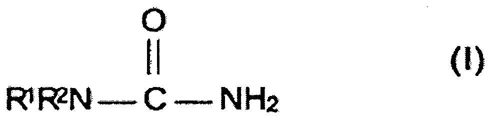 wherein R¹ and R² are each independently a linear or branched aliphatic hydrocarbon residue having 1 to 4 carbon atoms, wherein the urea derivatives of the formula (I) are used to extend the storage stability of epoxy resin systems as accelerators in combination with dicyandiamide as a latent curing agent for epoxy resin systems based on optionally halogenated bisphenols of type A or type F and based on resorcinol or tetrakisphenylolethane.

## Revendications

1. Utilisation de N,N-diméthylurée en tant qu'accélérateur en association avec du dicyanodiamide en tant que durcisseur latent pour des systèmes de résine époxy à base de bisphénols de type A ou F éventuellement halogénés, ainsi qu'à base de résorcinol ou de tétrakisphényloléthane, les systèmes de résine époxy correspondants présentant une stabilité au stockage à 40 °C au moins de plus de 50 jours.

2. Utilisation selon la revendication 1, **caractérisée en ce que** les systèmes de résine époxy correspondants présentent une stabilité au stockage à 40 °C d'au moins 53 jours.

3. Utilisation selon la revendication 1 ou 2, **caractérisée en ce que** l'on met en oeuvre la N,N-diméthylurée dans une proportion de 0,5 à 15 % en poids, par rapport à la résine époxy.

4. Utilisation selon l'une des revendications 1 à 3, **caractérisée en ce que** le dicyanodiamide est mis en oeuvre dans une proportion de 1 à 15 % en poids par rapport à la résine époxy.

5. Utilisation selon l'une des revendications 1 à 4, **caractérisée en ce que** la réaction de durcissement des résines époxy est opérée à des températures comprises entre 70 et 220 °C, en particulier entre 80 et 160 °C.

6. Utilisation selon l'une des revendications 1 à 5, **caractérisée en ce que** la N,N-diméthylurée et le dicyanodiamide présentent une grosseur de particule moyenne de 0,5 à 100 µm.

7. Utilisation selon l'une des revendications 1 à 6,**caractérisée en ce que** l'on met en oeuvre la N,N-diméthylurée en association avec le dicyanodiamide en tant que durcisseur latent pour le durcissement à chaud de la résine époxy dans le domaine des matériaux composites renforcés par des fibres (matériaux composites), des revêtements par poudre, des stratifiés électriques et des adhésifs.

8. Utilisation de dérivés d'urée substitués de manière asymétrique de la formule générale (I) 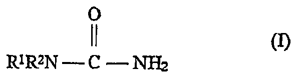 dans laquelle R¹ et R² représentent chacun indépendamment l'un de l'autre un groupe hydrocarbure aliphatique linéaire ou ramifié, comportant 1 à 4 atomes de C, les dérivés d'urée de la formule (I) étant mis en oeuvre en tant qu'accélérateurs pour prolonger la stabilité au stockage des systèmes de résine époxy en association avec du dicyanodiamide en tant que durcisseur latent pour les systèmes de résine époxy à base de bisphénols de type A ou F éventuellement halogénés, ainsi qu'à base de résorcinol ou de tétrakisphényloléthane.
